Europäisches Patentamt

(19) European Patent Office

Office européen des brevets

(11) Veröffentlichungsnummer: **0 284 085 B1**

(12) **EUROPÄISCHE PATENTSCHRIFT**

(45) Veröffentlichungstag der Patentschrift:
05.12.90

(51) Int. Cl.⁵: **C04B 41/64**, C09D 183/04

(21) Anmeldenummer: **88104827.6**

(22) Anmeldetag: **25.03.88**

(54) **Wärmedämmformkörper auf Basis von porösem, anorganischem Wärmedämmstoff mit Organopolysiloxanbeschichtung.**

(30) Priorität: **26.03.87 DE 3709864**

(43) Veröffentlichungstag der Anmeldung:
**28.09.88 Patentblatt 88/39**

(45) Bekanntmachung des Hinweises auf die Patenterteilung:
**05.12.90 Patentblatt 90/49**

(84) Benannte Vertragsstaaten:
**AT BE CH DE ES FR GB IT LI NL SE**

(56) Entgegenhaltungen:
**EP-A- 0 002 502**
**EP-A- 0 153 500**
**DE-A- 2 558 184**
**DE-A- 3 144 011**

(73) Patentinhaber: **WACKER-CHEMIE GMBH,
Prinzregentenstrasse 22, D-8000 München 22(DE)**

(72) Erfinder: **Gerhardinger, Dieter, In den Grüben 125,
D-8263 Burghausen(DE)**
Erfinder: **Reisacher, Johannes, Sailerstrasse 16,
D-8960 Kempten(DE)**
Erfinder: **Stohr, Günter, Dr., Dipl.-Chem.,
Stuibenstrasse 14, D-8968 Durach(DE)**
Erfinder: **Wegehaupt, Karl-Heinrich Dr.,Dipl.-Chem.,
Marktler Strasse 78, D-8263 Burghausen(DE)**

## Beschreibung

Aus der EP-A-90883 ist es bekannt, Wärmedämmformkörper, die aus einer verpreßten Mischung aus einer feinverteilten Komponente wie pyrogen hergestelltes Siliciumdioxid, einem Trübungsmittel und einer hochtemperaturbeständigen Faser bestehen, mit einer wäßrigen Suspension, die neben Wasser ein Gemisch aus Bentonit und anorganischer Faser enthält, zu beschichten. Diese so behandelten Wärmedämmstoffe können zusätzlich noch einen oder mehrere Überzüge auf Basis organischer oder anorganischer Lacksysteme, Siliconmassen oder niedrigschmelzender Glasuren tragen. Eine direkte Aufbringung der dort genannten organischen oder anorganischen Überzüge auf derartige Wärmedämmstoffe ohne die Beschichtung mit der genannten wäßrigen Suspension ist gemäß EP-A-90883 nicht möglich.

Aufgabe der Erfindung ist es Wärmedämmformkörper auf Basis von micro-porösem, anorganischem Wärmedämmstoff vor mechanischen Einwirkungen wie Abrieb, vor Verunreinigungen wie Staub, vor Feuchtigkeit und Flüssigkeiten allgemein mittels einer Beschichtung mit einer festhaltenden, dauerhaften, elektrisch isolierenden Oberfläche zu schützen.

Gegenstand der Erfindung sind Wärmedämmformkörper auf Basis micro-poröser, anorganischer Wärmedämmstoffe mit Organopolysiloxanbeschichtung, dadurch gekennzeichnet, daß ein unbeschichteter Wärmedämmformkörper mit einer zu einem Elastomeren vernetzenden Masse auf Grundlage von Diorganopolysiloxanen, die stäbchenförmiges Mischpolymerisat aus Styrol und (Meth)acrylsäureester enthält, das durch Mischpolymerisation von Styrol und (Meth)acrylsäureester mittels freier Radikale in Gegenwart des Diorganopolysiloxans erzeugt wird, beschichtet wird.

Überraschenderweise können erfindungsgemäß Wärmedämmformkörper auf Basis micro-poröser, anorganischer Wärmedämmstoffe mit einer festhaltenden und dauerhaften Organopolysiloxanbeschichtung unter Vermeidung einer Vorabbeschichtung des Wärmedämmformkörpers, wie in der EP-A-90883 vorgeschlagen, erhalten werden.

Die Herstellung von unbeschichteten Wärmedämmformkörpern auf Basis von micro-porösen, anorganischen Wärmedämmstoffen ist bereits vielfach beschrieben worden und muß daher nicht näher erläutert werden. Erfindungsgemäß werden unbeschichtete Wärmedämmformkörper auf Basis von verpreßtem mikroporösem Wärmedämmstoff verwendet. Mikroporöse Wärmedämmstoffe sind hierbei feinteilige Metalloxide, wobei sich folgende typische Zusammensetzungen für das Wärmedämmmaterial bewährt haben:

30-100 Gew.-% feinteiliges Metalloxid
0- 30 Gew.-% Trübungsmittel
0- 20 Gew.-% Fasermaterial
0- 15 Gew.-% anorganisches Bindemittel

Vorzugsweise beträgt der Bindemittelanteil 0,3 bis 1,5 Gew.%.

Beispiele für feinteiliges Metalloxid sind pyrogen erzeugte Kieselsäuren, einschließlich Lichtbogenkieselsäuren, alkaliarme Fällungskieselsäuren, analog hergestelltes Aluminiumoxid, Titanoxid und Zirkonoxid, sowie Mischungen von mindestens zwei dieser Metalloxide. Die feinteiligen Metalloxide weisen spezifische Oberflächen von 50-700m²/g, vorzugsweise 70-400m²/g auf.

Als Trübungsmittel kommen Ilminit, Titandioxid, Eisen-II-Eisen-III-Mischoxid, Chromdioxid, Zirkonoxid, Zirkonsilikat, Manganoxid sowie Eisenoxid in Betracht. Die Trübungsmittel weisen vorteilhafterweise ein Absorptionssmaximum im Infrarotbereich zwischen 1,5 und 10μm auf.

Beispiele für Fasermaterial sind Glaswolle, Steinwolle, Schlackenwolle, keramische Fasern, wie sie aus Schmelzen von Aluminiumoxid und/oder Siliciumoxid gewonnen werden, Asbestfasern und andere.

Als anorganische Bindemittel werden beispielsweise die Boride des Aluminiums, des Titans, des Zircons, des Calciums, Silicide wie Calciumsilicid und Calcium-Aluminium-Silicid, inbesondere jedoch Borcarbid eingesetzt. Beispiele für weitere Bestandteile sind basische Oxide, insbesondere Magnesiumoxid, Calciumoxid oder Bariumoxid.

Die erfindungsgemäßen Wärmedämmformkörper sind meist als Platten, Profile, Rohre, Kreissegmente und als Formteile regelmäßiger und unregelmäßiger Geometrie ausgestaltet. Als weitere Formgebungselemente seien abgeschrägte Kantlen, Falze und Nuten genannt.

Die Wärmedämmformkörper auf Basis von porösem anorganischem Wärmedämmstoff sind erfindungsgemäß mit einer zu einem Elastomeren vernetzenden Masse auf Grundlage von Diorganopolysiloxanen, die stäbchenförmiges Mischpolymerisat aus Styrol und (Meth)acrylsäureester enthält, das durch Mischpolymerisation von Styrol und (Meth)acrylsäureester mittels freier Radikale in Gegenwart des Diorganopolysiloxans erzeugt wird, beschichtet.

Die Herstellung der erfindungsgemäß verwendeten zu einem Elastomeren vernetzenden Massen auf Grundlage von Diorganopolysiloxanen, die stäbchenförmiges Mischpolymerisat aus Styrol und (Meth)acrylsäureester enthält, das durch Mischpolymerisation von Styrol und (Meth)acrylsäureester mittels freier Radikale in Gegenwart des Diorganopolysiloxans erzeugt wird, ist bereits vielfach beschrieben worden und muß daher hier nicht näher erläutert werden. Sie ist z.B. in US 3 555 109 und 3 776 875 (veröffentlicht 12.Januar 1971 und 4.Dezember 1973, I.C. Getson, Stauffer Chemical Company), US 4 032 499 (veröffentlicht 28.Juni 1977, F.-H. Kreuzer et al. Consortium für elektrochemische Industrie GmbH) eingehend beschrieben. Weiter sind derartige Massen im Handel erhältlich. Es handelt sich hierbei um sogenannte Einkomponentenmassen, die über enthaltene polyfunktionelle und leicht hydrolysierbare Siliciumverbindungen durch Einfluß der Luftfeuchtigkeit vernetzen. Es ist auch bereits bekannt, derartige Massen zur Beschichtung von Betonoberflächen zu verwenden (vgl. DE-A 3 144 011).

Vorzugsweise beträgt die Menge von Organopolysiloxan 20-60 Gew.-% bezogen auf das Gesamtgewicht von Diorganopolysiloxan und Mischpolymerisat aus Styrol und (Meth)acrylsäureester. Weiter ist bevorzugt, daß die Mischpolymerisate aus Styrol und (Meth)acrylsäureester, die in Gegenwart von Diorganopolysiloxan erzeugt werden, zu 35 bis 70 Gewichtsprozent aus sich von Styrol ableitenden Einheiten und zum Rest aus sich von (Meth)acrylsäureester ableitenden Einheiten bestehen. Besonders bevorzugt als Mischpolymerisate, die in Gegenwart des Diorganopolysiloxan erzeugt werden, sind solche aus Styrol und n-Butylacrylat. Das n-Butylacrylat kann aber auch mindestens teilweise durch z.B. Methylacrylat, Ethylacrylat, n-Propylacrylat, Isopropylacrylat, sec.- Butylacrylat, Methylmethacrylat, Ethylmethacrylat, n-Propylmethacrylat, Isopropylemethacrylat, n-Butylmethacrylat oder sec.-Buthylmethacrylat oder ein Gemisch aus mindestens zwei dieser (Meth)acrylsäureester ersetzt sein. Insbesondere wegen der leichten Zugänglichkeit sind vorzugsweise mindestens 80% der Anzahl der SiC-gebundenen organischen Reste der Diorganopolysiloxane, in deren Gegenwart die Mischpolymerisate aus Styrol und (Meth)acrylsäureester erzeugt werden, Methylreste. Vorzugsweise haben die Diorganopolysiloxane eine Viskosität von 8000-60000mPa.s bei 25°C.

Die erfindungsgemäß verwendeten zu Elastomeren vernetzenden Massen können neben Vernetzungsmitteln wie Methyltris(methylethylketoxim)-silan und Vernetzungskatalysatoren wie Di-n-butylzinnlaurat gegebenenfalls weitere Stoffe enthalten. Beispiele für solche Stoffe sind Füllstoffe, wie pyrogen erzeugtes Siliciumdioxid, Lösungsmittel, wie Alkangemische, Verdickungmittel wie Thixotropiezusätze und Pigmente. Vorzugsweise enthalten die erfindungsgemäß verwendeten zu Elastomeren vernetzenden Massen auch Haftvermittler. Als Haftvermittler haben sich vor allem aminohaltige Silane als nutzvoll herausgestellt. Es sind solche Silane, die je Molekül mindestens eine über Kohlenstoff an Silicium gebundene Aminogruppe und mindestens einen über Sauerstoff an Silicium gebundenen, einwertigen, gegebenenfalls durch eine Aminogruppe-oder Alkoxygruppe substituierten Kohlenwasserstoffrest enthalten, und/oder Teilhydrolysate von solchen Silanen besonders geeignet. Beispiele für solche Silane sind

$CH_3Si(OCH_2CH_2NH_2)_2(CH_2)_3O(CH_2)_2NH_2$
$(CH_3O)_3Si(CH_2)_3NH(CH_2)_2NH_2$
$H_2N(CH_2)_2O(CH_2)_3Si(OCH_2CH_2NH_2)_3$
N-β-Aminoethyl-γ-aminopropyltriethoxysilan
β-Aminoethyltriethoxysilan
N-β-Aminoethyl-δ-aminobutyltriethoxysilan
γ-Aminopropyltriethoxysilan
Aminomethyltriethoxysilan
N-β-Aminoethyl-γ-aminopropyltris-(methoxyethylenoxy)-silan und δ-Aminobutyltriethoxysilan sowie Verbindungen der allgemeinen Formel

$H_2N(CH_2)_2NH(CH_2)_3Si(OR)_3$

wobei R ein Alkylrest mit 1 bis 5 Kohlenstoffatomen je Rest oder ein Methoxythylenrest ist.

Vorzugsweise haben die erfindungsgemäßen Beschichtungen eine Dicke von 100 bis 400μm, insbesondere 200 bis 300μm.

Das Auftragen der erfindungsgemäßen Beschichtung kann in beliebiger für das Auftragen von flüssigen oder pastösen Stoffen auf Formkörper geeigneter Weise z.B. durch Tauchen, Sprühen, Streichen, Gießen oder Walzen erfolgen. Nach dem Auftragen der Massen auf die Wärmedämmformkörper vernetzen die Massen zu Organopolysiloxanelastomeren. Diese Vernetzung erfolgt bei Raumtemperatur. Sie kann durch Erwärmen z.B. auf 50 bis 150°C, insbesondere 70°C, z.B. durch Induktionswärme beschleunigt werden.

Beispiel

Eine Wärmedämmplatte bestehend aus verpreßtem mikroporösem Material der Zusammensetzung
62,5 Gew.-% pyrogen erzeugtes Siliciumdioxid
31,7 Gew.-% Ilmenit
5,0 Gew.-% Aluminiumsilikatfaser
0,8 Gew.-% Borcarbid
wurde mit einer zu einem Elastomeren vernetzenden Masse der Zusammensetzung
89 Gewichtsteile einer Masse bestehend aus
53 Gewichtsteilen einer Masse einer Viskosität von 50000mPa.s bei 25°C bestehend aus 30 Gew.-% Dimethylpolysiloxan und 70 Gew.-% Mischpolymerisat (55 Gew.-% Styrol und 45 Gew.-% n-Butylacrylat)
35,5 Gewichtsteilen Alkangemisch (Sdp. 140-160°C/1.0013 mbar)
0,5 Gewichtsteilen hochdisperse Kieselsäure mit einer Oberfläche nach BET von 200m²/g,
3 Gewichtsteile Toluol
5 Gewichtsteile Methyltributanonoximosilan
3 Gewichtsteile Aminoethylaminopropyltriethoxysilan und
0,05 Gewichtsteile Dibutylzinndiacetat,
die eine Viskosität von 5000mPa.s gemesen nach Brookfield mit Spiendel 2 bei 2,5Upm besaß und in einem geeigneten Gefäß und unter Ausschluß von Feuchtigkeit lagerbar waren, beschichtet. Die Beschichtung erfolgte mittels eines Airlessgeräts oder einer Druckluftsprüheinrichtung. Die Vernetzung erfolgte durch Einwirkung von Luft innerhalb von 2 Stunden. Es wurde eine Beschichtung mit einer Dicke von 250μm erhalten.

**Patentansprüche**

1. Wärmedämmformkörper auf Basis micro-poröser, anorganischer Wärmedämmstoffe mit Organopolysiloxanbeschichtung, dadurch erhältlich, daß ein unbeschichteter Wärmedämmformkörper mit einer zu einem Elastomeren vernetzenden Masse auf Grundlage von Diorganopolysiloxanen, die stäbchenförmiges Mischpolymerisat aus Styrol und (Meth)acrylsäureester enthält, das durch Mischpolymerisation von Styrol und (Meth)acrylsäureester mittels freier Radikale in Gegenwart des Diorganopolysiloxans erzeugt wird, beschichtet wird.

**Revendications**

1. Article moulé calorifuge à base de matériaux calorifuges microporeux et inorganiques, comportant un revêtement de polyorganosiloxane, pouvant être obtenus par le fait qu'un article moulé calorifuge non-enduit est revêtu d'une composition destinée à être réticulée pour donner un élastomère, à base de polyorganosiloxanes, composition contenant un copolymère en bâtonnets de styrène et de (méth) acrylate, qui est obtenu par copolymérisation de styrène et d'un (méth)acrylate à l'aide de radicaux libres en présence du polyorganosiloxane.

## Claims

1. Thermoinsulating moulding composition based on microporous, inorganic thermoinsulating materials and having an organopolysiloxane coating, which can be obtained by coating an uncoated thermoinsulating moulding with a composition which is based on diorganopolysiloxanes, crosslinks to form an elastomer and contains a rodshaped styrene/(meth)acrylate copolymer which is produced by copolymerization of styrene and (meth)acrylates by means of free radicals in the presence of the diorganopolysiloxane.